# EUROPEAN PATENT SPECIFICATION

(11) **EP 0 795 062 B1**
(45) Date of publication and mention of the grant of the patent: **05.01.2000**
(21) Application number: 95939900.7
(22) Date of filing: 13.11.1995
(51) Int. Cl.: E03C 1/04

(54) **TOP MOUNTING FAUCET ASSEMBLY**
OBERSEITIG MONTIERTE WANNENBATTERIE
ENSEMBLE DE ROBINETS A MONTAGE PAR LE DESSUS

(30) Priority: 02.12.1994 US 348634
(43) Date of publication of application: 17.09.1997
(73) Proprietor: STERLING PLUMBING GROUP, INC., Rolling Meadows, IL 60008 (US)
(72) Inventor: SAUTER, Bruce, M., Elgin, IL 60123 (US); SHORT, Kevin, G., Midlothian, IL 60445 (US); BELTEMACCHI, Peter, P., Chicago, IL 60620 (US)
(74) Representative: Baillie, Iain Cameron
(86) International application number: PCT/US95/14695
(87) International publication number: WO 96/17137

(56) References cited:
- EP-A- 0 213 656
- DE-A- 2 408 207
- FR-A- 2 250 865
- FR-A- 2 525 296
- US-A- 4 762 143

## Description

### Field of Invention

This invention relates to the mounting of valves to a plumbing fixture and more particularly to the mounting of the faucets from the top of the fixture.

### Description of the Prior Art

The installation of a faucet into a plumbing fixture has often been a time consuming task requiring that at least some of the work be performed by lying on one's back in a dark and hard to reach under-counter area. There is a need to improve this task such as by providing a less complicated procedure which can in large part be effected from the top of the plumbing fixture.

In U.S. Patent 4,553,277, a faucet and clamping mechanism is disclosed which provides a top side connection. However, it involves a multicomponent assembly. In U.S. Patents 3,790,966, 4,671,316, 4,760,861, 4,762,143 and 5,127,427, toggle bolts or bushings are described for top installations of faucets. These require, among other things, the drilling of additional holes through a support surface.

U.S. Patent 5,232,008 also illustrates a top mounted faucet. However, the valve bodies must be first inserted from beneath the sink deck. Thus, a need still exists for a simplified assembly.

EP-A-0 213 656 discloses a valve assembly comprising the features of the preamble of claim 1. The assembly comprises an elevator made of plastic and having thin arms 14 which are manually bent inward when the valve assembly is inserted through the hole in the countertop. The arms then spring outward because of their elastic memory once they clear the hole.

The present invention provides a valve assembly for mounting on a support, the support having a wall with an opening, a supporting surface at one side, and a clamping surface at an opposite side, the valve assembly comprising an elevator having at least one pivot arm, said elevator adapted to be inserted through said opening when said pivot arm is in a retracted position; a valve body adapted to be positioned on said supporting surface; a threaded actuating member extending through a portion of said valve body and also threadably engaging said elevator whereby rotation of said threaded actuating member can effect movement of said elevator toward said clamping surface where the unretracted pivot arm can restrict movement of said elevator through the supporting surface, wherein the elevator includes a threaded bracket engaging the threaded actuating member, the pivot arm being attached to the bracket by a pivot pin, and spring means biasing the pivot arm towards an expanded position.

The features of the invention therefore include:
a. providing a valve assembly of the above kind for mounting most of the components from the top of a support surface;
b. providing a valve assembly of the above kind which enables quick, yet secure assembly;
c. providing a valve assembly of the above kind which employs a small number of parts and is inexpensive to produce; and
d. providing a valve assembly of the above kind which is suited to either single or dual handle faucet installations.

The foregoing and other features and advantages of the invention will appear in the following detailed description. In the description, reference is made to the accompanying drawings which show, by way of illustration and not limitation, preferred embodiments of the invention.

### Description of the Drawings

Fig. 1 is a front top perspective view showing the valve assembly mounted on a sink ledge support which is partially shown;
Fig. 2 is a partial sectional and exploded view of the valve assembly of Fig. 1;
Fig. 3 is a sectional view taken along line 3-3 of Fig. 2;
Fig. 4 is an assembly view similar to Fig. 2 but with the blocking member repositioned under the counter;
Fig. 5 is a sectional view taken along line 5-5 of Fig. 4;
Fig. 6 is an enlarged perspective view illustrating the elevator of Fig. 2 with spring tensioned arms; and
Fig. 7 is a view similar to Fig. 6 illustrating another embodiment of the elevator.

### Description of the Preferred Embodiments

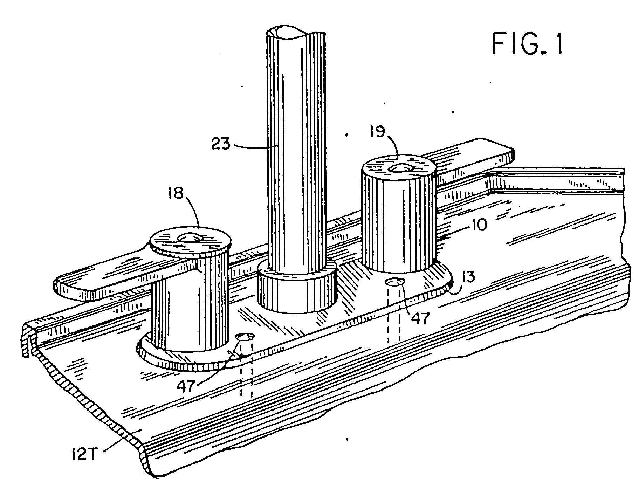

Referring to Figs. 1-3, a top mounting valve assembly (generally 10) is shown in conjunction with a sink ledge 12 having the usual access openings 12'. The valve assembly 10 includes a plastic molded valve body or manifold 13 for delivery of water from valve housings to a central spout 23 such as through passageway 22. Water is supplied to the manifold 13 by means of the water inlet shanks which are in turn connected to respective hot and cold inlet conduits 29 by the respective couplings.

To mount the valve assembly 10 onto the sink ledge 12, inlet conduits 29 would first be connected to the water inlet shanks. The inlet conduits 29 are orientated and positioned to be placed through the sink ledge openings 12'. The valve assembly 10 is lowered until the plate 57 contacts the upper surface 12T of the sink ledge 12. Molded plastic elevator members 34 which are slidably secured to the water inlet shanks also pass through the openings 12'.

Once the plate 57 is resting on the sink ledge 12, the screws 42 are rotated such as by a screwdriver through screw holes at the top of the plate 57. Rotation of the screws 42 in the screw holes of the members 34 causes the slidable member 34 to ride upwardly on the respective water inlet 29.

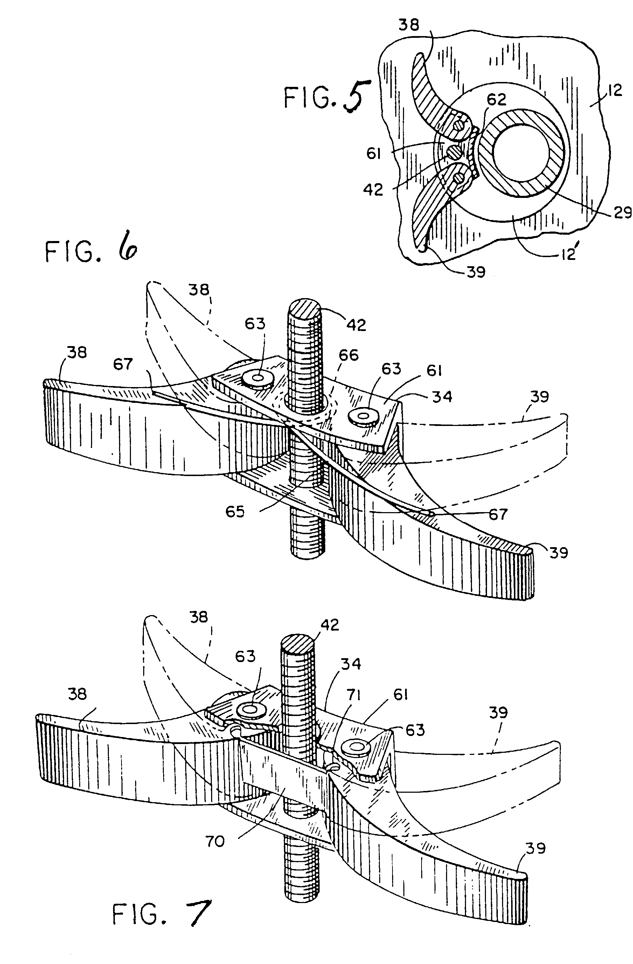

The elevator 34 has the spring tensioned arms 38 and 39 which move laterally. Referring specifically to Figs. 6 and 7, these arms are pivotally attached to the bracket 61 by the pivot pins 63. A spring 65 has a center section 66 (as shown particularly in Fig. 6) which surrounds the screw 42 to which bracket 61 is threaded. The legs of the spring arms are mounted in the hinged arms 38 and 39 by the slots 67.

A different type of spring arrangement is utilized in Fig. 7 wherein a band type spring 70 is employed and is mounted in the hinged arms 38 and 39 by the slots 71.

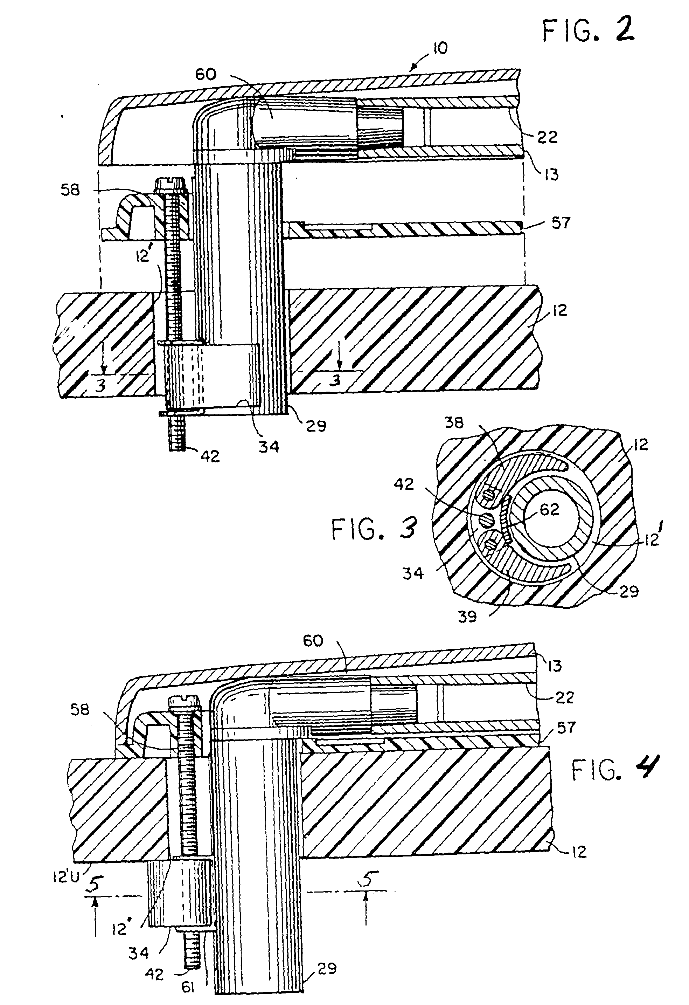

The installation of the valve assembly is essentially as follows. The hinged arms 38C and 39C are collapsed around the hot water inlet 29C as shown in Figs. 2 and 3. The plate 57 carries the screw 42 through passage 58 for actuating movement of the elevator 34. With the arms so collapsed, they can be passed through the opening 12' and will be kept from expanding by the wall of the opening. After the arms clear the opening 12', they expand under the bias of springs 65 or 70 in the opposite direction as shown in Figs. 4 and 5. The screw 42 is then activated to move the elevator 34 upwardly until the arms 38 and 39 engage under the lavatory 12 as shown at 12'U. The elevator 34 is guided upwardly by the bracket arcuate guide surface 62 engaging the conduit 29. .With the elevator in the position shown in Figs. 4 and 5, the manifold 13 is placed in the position shown in Fig. 4. There it will be seen that the hot water in the conduit 29 is connected to the passageway 22 by the connector 60 to deliver water to a spout such as shown at 23 in Fig. 1.

Disassembly is effected by turning the screw 42 in the reverse direction until the elevator member 34 drops from screw 42 when it reaches the end of screw threads.

It will therefore be appreciated that a top mounted valve assembly can be achieved in a simple and secure manner by merely turning a screw from above the sink or lavatory fixture. A secure mounting is effected by hinged arms which can be passed through the same openings as the water inlet conduits. Thus, no additional holes need be made.

Still another feature of the valve assembly resides in the aesthetic feature of the mounting screws being covered either with caps and/or the pivotal escutcheon.

Yet another feature is the versatility of utilizing the hinged arms and the mounting block on either a single handle or dual handle faucet.

Thus, the invention provides an improved mounting for a valve assembly. While the preferred embodiments have been described above, it should be readily apparent to those skilled in the art that a number of modifications and changes may be made without departing from the scope of the invention. For example, while the valve assembly has been shown as part of a faucet attached to sink and lavatory plumbing fixtures, it is also adaptable for use with other types of fluid valves (e.g. a shower control valve on a wall). Also, the specific materials mentioned are not the only materials which can be used. All such and other modifications are meant to be in the scope of the invention.

## Claims

1. A valve assembly for mounting on a support (12), the support having a wall with an opening (12'), a supporting surface at one side, and a clamping surface at an opposite side, the valve assembly comprising an elevator (34) having at least one pivot arm (38,39), said elevator adapted to be inserted through said opening (12') when said pivot arm is in a retracted position; a valve body adapted to be positioned on said supporting surface; a threaded actuating member (42) extending through a portion of said valve body and also threadably engaging said elevator whereby rotation of said threaded actuating member (42) can effect movement of said elevator (34) toward said clamping surface where the unretracted pivot arm (38,39) can restrict movement of said elevator (34) through the supporting surface, characterized by the elevator (34) including a threaded bracket (61) engaging the threaded actuating member (42), the pivot arm (38,39) being attached to the bracket (61) by a pivot pin (63), and spring means (65,70) biasing the pivot arm (38,39) towards an expanded position.

2. The valve assembly of claim 1, characterized in that the valve body includes a faucet manifold member.

3. The valve assembly of claim 1, characterized in that the support is a lavatory or sink ledge.

4. The valve assembly of claim 1, characterized in that there are two pivot arms (38,39) and two pivot pins (63).

## Patentansprüche

1. Armaturenzusammenbau zur Befestigung an einem Träger (12), wobei der Träger eine Wand mit einer Öffnung (12'), eine Trägeroberfläche auf einer Seite und eine Aufspannoberfläche auf einer entgegengesetzten Seite aufweist, wobei der Armaturenzusammenbau eine Hebeeinrichtung (34) mit mindestens einem Dreharm (38, 39) umfaßt, wobei die genannte Hebeeinrichtung durch die genannte Öffnung (12') eingeführt werden kann, wenn sich der genannte Dreharm an einer eingezogenen Stellung befindet; mit einem Armaturengehäuse, das an der genannten Trägeroberfläche positioniert werden kann; mit einem Betätigungselement (42) mit Gewinde, das sich durch ein Teilstück des genannten Armaturengehäuses erstreckt und ferner durch eine Schraubverbindung mit der genannten Hebeeinrichtung eingreift, wobei die Rotation des genannten Betätigungselements (42) mit Gewinde eine Bewegung der genannten Hebeeinrichtung (34) in Richtung der genannten Aufspannoberfläche bewirken kann, wobei der nicht eingezogene Dreharm (38, 39) die Bewegung der genannten Hebeeinrichtung (34) durch die Trägeroberfläche sperren bzw. verhindern kann, dadurch gekennzeichnet, daß die Hebeeinrichtung (34) einen Gewindeträger (61) aufweist, der mit dem Betätigungselement (42) mit Gewinde eingreift, wobei der Dreharm (38, 39) durch einen Drehzapfen (63) an dem Träger (61) angebracht wird, und wobei eine federeinrichtung (65, 70) den Dreharm (38, 39) in Richtung einer erweiterten Stellung vorbelastet.

2. Armaturenzusammenbau nach Anspruch 1, dadurch gekennzeichnet, daß das Armaturengehäuse ein Leitungshahn-Verteilerelement aufweist.

3. Armaturenzusammenbau nach Anspruch 1, dadurch gekennzeichnet, daß es sich bei dem Träger um einen Handwaschbecken- oder einen Spülbeckenvorsprung handelt.

4. Armaturenzusammenbau nach Anspruch 1, dadurch gekennzeichnet, daß zwei Dreharme (38, 39) und zwei Drehzapfen (63) vorgesehen sind.

## Revendications

1. Ensemble à robinet destiné à être monté sur un support (12), le support ayant une paroi qui a une ouverture (12'), une surface de support d'un premier côté et une surface de serrage du côté opposé, l'ensemble obturateur comprenant un organe élévateur (34) ayant au moins un bras de pivot (38, 39), l'organe élévateur étant destiné à être inséré dans l'ouverture (12') lorsque le bras de pivot est en position reculée, un corps obturateur destiné à être placé sur la surface de support, et un organe fileté de manoeuvre (42) s'étendant dans une partie du corps d'obturateur et coopérant aussi par vissage avec l'organe élévateur de manière que la rotation de l'organe fileté de manoeuvre (42) puisse provoquer un déplacement de l'organe élévateur (34) vers la surface de serrage à un endroit où le bras de pivot (38, 39) qui n'a pas reculé peut limiter le déplacement de l'organe élévateur (34) à l'aide de la surface de support, caractérisé en ce que l'organe élévateur (34) comporte une équerre taraudée (61) coopérant avec l'organe fileté de manoeuvre (42), le bras de pivot (38, 39) étant fixé à l'équerre (61) par une broche (63) formant pivot, et un dispositif à ressort (65, 70) rappelant le bras de pivot (38, 39) vers une position écartée.

2. Ensemble obturateur selon la revendication 1, caractérisé en ce que le corps d'obturateur comprend un organe collecteur de robinet.

3. Ensemble obturateur selon la revendication 1, caractérisé en ce que le support est une surface de lavabo ou d'évier.

4. Ensemble obturateur selon la revendication 1, caractérisé en ce qu'il comprend deux bras de pivot (38, 39) et deux broches formant pivot (63).
